# NEW EUROPEAN PATENT SPECIFICATION

(11) **EP 1 630 213 B2**
(45) Date of publication and mention of the opposition decision: **17.08.2011**
(45) Mention of the grant of the patent: 09.01.2008
(21) Application number: 05018667.5
(22) Date of filing: 06.05.2004
(51) Int. Cl.: C09D 11/10, C09D 11/00

(54) **Ink-jet ink set and recording method using the same**
Tintenstrahldruckfarbenset und Aufzeichnungsverfahren hiermit
Assortiment d'encres pour imprimantes à jet d'encre et méthode d'enregistrement l'utilisant

(30) Priority: 14.05.2003 JP 2003135688
(43) Date of publication of application: 01.03.2006
(62) Divisional of application: 04252641.8
(73) Proprietor: Konica Minolta Medical & Graphic, Inc., Hino-shi, Tokyo 191-8511 (JP)
(72) Inventor: Nakajima, Atsushi, 1 Sakura-machi Hino-shi Tokyo 191-8511 (JP)
(74) Representative: Stuttard, Garry Philip

(56) References cited:
- EP-A- 1 302 499
- EP-A- 1 321 497
- WO-A-99/29787
- WO-A1-01/32789
- GB-A- 2 389 587
- US-A- 4 551 736
- US-A- 6 114 406
- US-A1- 2002 038 613
- US-A1- 2003 234 848
- US-B1- 6 232 361

## Description

### TECHNICAL FIELD

The present invention relates to a method for recording an image using an ink set for ink-jet recording.

### BACKGROUND

In recent years, ink-jet recording methods have found wide application in various graphic arts fields such as photography, various kinds of printing, marking and specific printing such as color filters due to its ability to form images simply and cheaply. Particularly, it has also become possible to obtain image quality comparable to silver salt photography by utilizing a recording apparatus which ejects and controls minute dots; ink in a wide color reproduction range, durability and ink ejection capability have been improved; and exclusive paper in which ink absorption, color forming property of the colorant and surface gloss have been greatly enhanced.

In recent years, methods for image recording with which images are formed using ultraviolet-curable ink (hereinafter, referred to as UV ink) with an ink-jet method and the wet images are irradiated by ultraviolet rays, have been developed and come into practical use. These UV inks are detailed in Patent Documents 1 - 5.

On the other hand, as a method to improve gradation and graininess in an ink-jet method, a method employing deep color inks and light color inks is known. For example, in Patent Documents 6 and 7, described is employment of a plurality of water-based dye inks having different dye ingredients. In Patent Document 8, described is how high quality images can be obtained by reducing ink deposition under various conditions, controlling the viscosity difference between deep and light color inks being not more than 1.0 mPa·s at 0 - 40 °C.

As a result of diligent study to obtain high quality images excellent in gradation and graininess, employing deep and light color UV inks, the inventor found that problems completely different from the typical problems of water-based inks were generated, in cases when the colorants ingredients of deep and light color inks are changed without changing other components.

Firstly, UV ink is firmly fixed by photoreaction, but deep and light color inks are different in ultraviolet transparency. In cases when parameters other than colorants are maintained, the sensitivity levels of deep and light color inks differ, resulting in problems of dot diameters and bleeding of the deposited ink. Further, in cases when a light color ink is employed, the ink volume in an intermediate color area is increased due to overlapping of a deep color ink and a light color ink, and thus ink curability is affected, resulting in problems such as bleeding and impaired adhesion to the recording medium. In water-based inks, since fixing of ink depends on its absorption into the recording medium, the design of ink is focused on absorbability of the ink. However, in UV ink, it is necessary to focus on deep and light color ink photoreaction.

Further, in cases when deep and light color inks are employed, the ink volume in an intermediate color area is increased, resulting in problems of bleeding and inadequate curing, even when employing the same countermeasures of ink components, recording methods and ultraviolet irradiation methods as employed in printers using only deep color inks. In other words, to obtain high quality images, in cases when deep and light color inks are employed, it is necessary to select materials having high reacting ability and high interior curability, and to apply suitable recording conditions and preferable ultraviolet irradiation methods.

Secondly, UV ink generally has a polymerizable compound as a major component, and a high viscosity. Consequently, in usual ink-jet method, ink is heated to a certain temperature to lower the viscosity prior to ejection. In the case of UV ink, ink ejecting ability does not become a problem, since ink ejecting ability is a problem under the various conditions in cases of a water-based ink as mentioned above. However, since UV ink employs mainly pigments as colorants and a pigment dispersion system of relatively high viscosity, UV ink tends to become a non-Newtonian liquid. Flocculation property of dispersed pigments is different in deep color inks and light color inks, so that viscosities are quite different in high shearing regions of ink-jet nozzles. That means, using the same types of recording heads, to obtain the same ink ejecting ability such as ejection rates and ink droplet size for both deep and light color inks, it is necessary to separately set up viscoelasticity of deep color inks and light color inks.
Patent Document 1: International Application No. (hereinafter, referred to as WO) 99/29787
Patent Document 2: WO 99/29788
Patent Document 3: WO 97/31071
Patent Document 4: unexamined Japanese Patent Application Publication No. (hereinafter, referred to as JP-A) 5-214280
Patent Document 5: JP-A 2002-188025
Patent Document 6: JP-A 60-56557
Patent Document 7: JP-A 57-156264
Patent Document 8: JP-A 60-56558

### SUMMARY

In view of the above-described problems, the present invention is attained. An object of the present invention is to provide a method for recording an image using an ink set for photo-curable ink-jet printing which yields an image of high quality.

The object of the present invention can be achieved by the following method.

"The inks of the same color" means "the inks which have substantially the same absorption curve.

An aspect of the present invention is a method defined in claim1.

Further objects of the present invention will become apparent from the detailed description. Specific features of preferred embodiments of the present invention are set out in the dependent claims.

### BRIEF DESCRIPTION OF DRAWINGS

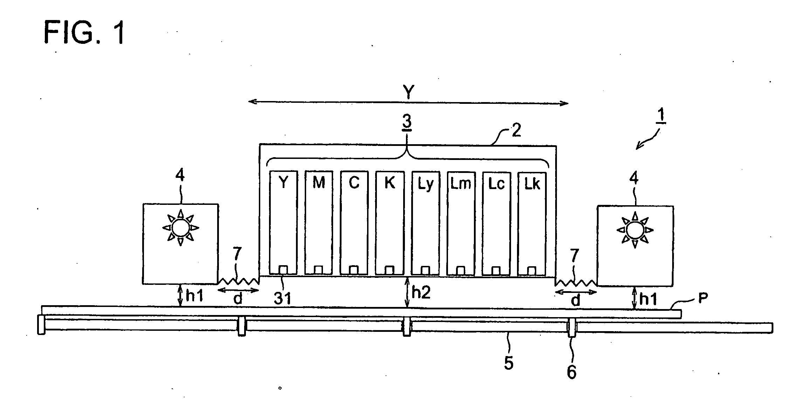

Fig. 1 is a schematic diagram of a front view of a printer which indicates essential portions of a printer used for the present invention.

### DESCRIPTION OF EXEMPLARY EMBODIMENTS

The following embodiments are also preferred embodiments of the present invention.

A method of recording an image using an ink set for ink-jet recording, wherein each ink contains two polymerizable compounds having a different viscosity and a weight content of the polymerizable compound having a low viscosity is larger than a weight content of the polymerizable compound having a high viscosity.

A method of recording an image using an ink set for ink-jet recording, wherein the polymerizable compound comprises a mono-functional monomer in an amount of not less than 5 weight% based on the total weight of the polymerizable compound.

The method of recording, wherein a smallest volume of the ink droplets is from 1 to 20 pl.

The present invention will be detailed below.

As the result of diligent study, the inventor found that the above object could be achieved by a method defined in claim 1.

To realize these effects most effectively, it is preferable that each ink contains at least two polymerizable compounds having a different viscosity, and the weight content of the polymerizable compound having the lowest viscosity is high in the deep and light color inks.

Further, it is preferable that the ink is ejected onto a recording medium using a ink-jet printer ejecting ink droplet of 1 - 20 pl, followed by irradiation of ultraviolet rays to form images.

A photoinitiator (hereinafter, referred to simply as an initiator) generates reacted active species by absorption of ultraviolet rays, and ink is cured by the reaction of the reacted active species and the polymerizable compound. However, since shielding of ultraviolet rays into the interior of the ink occurs by ultraviolet absorption of the initiator itself, an initiator content has a most appropriate range considering adhesiveness of the ink to the recording medium. The most appropriate content is significantly different based on kinds and sensitivity of the polymerizable compound, luminescence wavelength and luminance of ultraviolet rays, light sensitive wavelength of the initiator, and kinds and contents of the colorant.
Generally, it is said that to obtain good physical properties of a formed layer, use of a high luminance light source and decreased initiator content are preferable. In this invention, the initiator content in the deep color ink is optimized from this viewpoint, and initiator content in the light color ink to that in the deep color ink is maintained in the range of 1/1 - 1/3, and further, the colorant content in the light color ink to that in the deep color ink is controlled within the range of 1/2 - 1/10, this enables a decrease of the absorption amount of the initiator in an intermediate color area where the ink volume is increased by overlapping of the deep color ink and the light color ink, and also to improve the interior curability of the ink.

In cases when the colorant content exceeds to 1/2 of the deep color ink, the density results in being as high as in the light color ink, and the effect of enhanced graininess cannot be obtained. Further, if the content ratio is less than 1/10, the density is too low and ink volume from highlighted area to intermediate color area is increased, resulting in problems of poor curing and an increase of ink consumption.

In cases when the initiator content in the light color ink exceeds that in the deep color ink, an ultraviolet absorption factor of ink images in the intermediate color area increases to result in deterioration of interior curability and adhesion onto the recording medium. Further, if it is less than 1/3, curable sensitivity of the light color ink decreases to result in bleeding of the ink in the light color areas.

The above colorant, the polymerizable compound and the photoinitiator will be further described later.

To obtain stable ejection factors such as ink droplet rate, droplet size and angle error using the same type ink-jet head in the deep and light color ink, the viscosity of the light color ink to the deep color ink is maintained at 1 - 1.5 at 50 °C under a condition of shear rate of 1,000 s⁻¹. In cases when inks having a viscosity of less than 7 mPa·s, such as when water-based inks are employed, the deep color ink and the light color ink can exhibit the same ejecting ability, if the ink viscosities of the deep and the light color inks are in the same range. Since UV ink preferably contains a pigment as a colorant and is dispersed with monomer dispersion, the UV ink exhibits a high viscosity and plastic fluidity. Therefore, the UV ink is used after the viscosity has been lowered to about 10 mPa·s by heating. However, colorant contents which provide plastic fluidity differ in the deep color ink and the light color ink. Using a general viscosimeter (or viscometer) the shear rate is far too small compared to the ejection rate of ink-jet, and thus, it is recognized that the set values of viscosity using a general viscosimeter may be different for the deep and the light color inks. In cases when it is less than 1, ejection sensitivity of the light color ink is extremely decreased to result in insufficient ejection accuracy. In cases when the above viscosity ratio is greater than 1.5, the driving force of the ink-jet nozzles to the light color ink is excessive, whereby problems such as air-injection occur.

The above shear rate and viscosity will be described later.

One of the embodiments of the present invention indicates the ink set for ink-jet recording containing at least two kinds of polymerizable compounds having differing viscosity, wherein the weight content of the polymerizable compound having the lowest viscosity is greater than the ones having higher viscosity.

To optimize the viscosity of the deep and the light color ink, it is preferable to combine more than two kinds of polymerizable compounds having a different viscosity, and in the light color ink, to increase the ratio of the low viscosity polymerizable compound than in the deep color ink. The polymerizable compound having a low viscosity is specifically preferred to have a viscosity of 5 mPa·s at 50 °C under a shear rate of 1,000 s⁻¹.

Use of the deep and light color inks increases the amount of ink in intermediate color areas. Thus, it is preferable to employ cationic polymerizing compounds exhibiting good interior curability due to good adhesion property onto the recording medium.

The total amount of the deep and light color inks tends for making an image to be increased compared with the case using only a deep color ink. In this case, internal hardening of ink will be an issue to be solved. One of the solution is to use a thinned-out operation of ink jetting and to increase the times of irradiation paths in order to obtain a sufficient hardening energy. However, thus hardened image on a flexible substrate has a tendency to be cracked after being subjected to bending or folding due to a thickness of ink is relatively large. When a mono-functional monomer is added to the polymerizable compound in an amount of not less than 5 weight% based on the total weight of the polymerizable compound, the flexibility of the hardened image can be increased even the amount of inks are increased. The added amount of a mono-functional monomer is preferably not less than 10 weight%.

There are two types of ink-jet recording methods. One is to complete recording with one pass (being known as a line recording type). The other is a serial recording type in which complete recording is accomplished in more than two-passes (although there exists a serial method with only one-pass). Since use of the deep and light color inks increases the amount of ink, thickness of ink layer increases when the deep and light color inks are ejected at the same time onto the recording medium. Consequently, in cases when ultraviolet rays are irradiated all at once to result in a thicker ink layer, deterioration of interior curability results. It is realized that the adhesion property onto the recording medium is greatly improved by employing a UV ink superior in deep and light color recording as described in items 1 - 4, and conducting serial recording of more than 2 passes, and further, irradiating with ultraviolet rays after each pass. A higher number of passes is more effective, and specifically preferable is more than 4 passes.

The above recording medium will be described later.

One of the embodiments of the present invention indicates a recording method for forming images using the foregoing ink-jet set, wherein the inks are ejected as drops of 1 - 20 pl onto the recording medium using an ink-jet printer, followed by irradiation by ultraviolet rays.

Another preferred method to enhance interior curability in intermediate color areas, is a method using smaller droplets. By providing smaller droplets, the maximum thickness of the deposited ink droplets can be decreased, enabling improvement of adhesiveness of the ink onto the recording medium. Specifically, in halftone areas where deep and light color inks overlap, it is preferable that the ink droplet size are 1 - 20 pl. In a gray scale head via which it is possible to eject various droplet sizes, it is specifically effective that the droplet size of deep or light color ink is decreased compared to the full-size drops. In cases when the droplet size is less than 1 pl, ejection accuracy cannot be assured. When greater than 20 pl, the effect to improve adhesiveness in intermediate color areas is deteriorated.

### Colorant

Next, the colorants of this invention will be described.

As a colorant usable in this invention, there is no specific limitation and, for example, pigments, dyes and dyes are acceptable, however, of these, pigments are preferable.

Initially, examples of typical dyes are listed, but the present invention is not limited to these examples.
Direct dyes:
C. I. Direct Yellow 1, 4, 8, 11, 12, 24, 26, 27, 28, 33, 39, 44, 50, 58, 85, 86, 100, 110, 120, 132, 142 and 144; and
C. I. Direct Red 1, 2, 4, 9, 11, 13, 17, 20, 23, 24, 28, 31, 33, 37, 39, 44, 47, 48, 51, 62, 63, 75, 79, 80, 81, 83, 89, 90, 94, 95, 99, 220, 224, 227, and 243; and
C. I. Direct Blue 1, 2, 6, 8, 15, 22, 25, 71, 76, 78, 80, 86, 87, 90, 98, 106, 108, 120, 123, 163, 165, 192, 193, 194, 195,196, 199, 200, 201, 202, 203, 207, 236 and 237; and
C. I. Direct Black 2, 3, 7, 17, 19, 22, 32, 38, 51, 56, 62, 71, 74, 75, 77, 105, 108, 112, 117 and 154.
Acid dyes:
C. I. Acid Yellow 2, 3, 7, 17, 19, 23, 25, 29, 38, 42, 49, 59, 61, 72 and 99; and
C. I. Acid Orange 56 and 64; and
C. I. Acid Red 1, 8, 14, 18, 26, 32, 37, 42, 52, 57, 72, 74, 80, 87, 115, 119, 131, 133, 134, 143, 154, 186, 249, 254 and 256; and
C. I. Acid Violet 11, 34 and 75; and
C. I. Acid Blue 1, 7, 9, 29, 87, 126, 138, 171, 175, 183, 234, 236 and 249; and
C. I. Acid Green 9, 12, 19, 27 and 41; and
C. I. Acid Black 1, 2, 7, 24, 26, 48, 52, 58, 60, 94, 107, 109, 110, 119, 131 and 155. Reactive dyes:
C. I. Reactive Yellow 1, 2, 3, 13, 14, 15, 17, 37, 42, 76, 95, 168 and 175; and
C. I. Reactive Red 2, 6, 11, 21, 22, 23, 24, 33, 45, 111, 112, 114, 180, 218, 226, 228 and 235; and
C. I. Reactive Blue 7, 14, 15, 18,19, 21, 25, 38, 49, 72, 77, 176, 203, 220, 230 and 235; and
C. I. Reactive Orange 5, 12, 13, 35 and 95; and
C. I. Reactive Brown 7, 11, 33, 37 and 46; and
C. I. Reactive Green 8 and 19; and
C. I. Reactive Violet 2, 4, 6, 8, 21, 22 and 25; and
C. I. Reactive Black 5, 8, 31 and 39. Basic dyes:
C. I. Basic Yellow 11, 14, 21 and 32; and
C. I. Basic Red 1, 2, 9, 12 and 13; and
C. I. Basic Violet 3, 7 and 14; and
C. I. Basic Blue 3, 9, 24 and 25.

As a colorant used in this invention, a pigment is preferably employed, and as such pigments, a colored organic or a colored inorganic pigment, in the public domain, may be employed. For example, listed are azo dyes such as azo-lakes, insoluble azo pigments, condensed azo pigments, and chelated azo pigments; polycyclic pigments such as phthalocyanine pigments, perylene and perylene pigments; anthraquinone pigments, quinacridone pigments, dioxanzine pigments, thioindigo pigments, isoindolinone pigments, quinophthaloni pigments; organic pigments such as basic dye type lakes, acid dye type lakes, nitro pigments, nitroso pigments, aniline black, and daylight fluorescent pigments; as well as inorganic pigments such as carbon black, but this invention is not limited to these examples.

As examples of pigments for magenta or red, listed are, for example, C. I. Pigment Red 2, 3, 5, 6, 7, 15, 16, 48:1, 53:1, 57:1, 122, 123, 139, 144, 146, 149, 166, 177, 178, 222 and C.I. Pigment Violet 19.

As examples of pigments for orange or yellow, listed are, for example, C. I. Pigment Orange 31 and 43; C. I. Pigment Yellow 12, 13, 14, 15, 17, 74, 83, 93, 94, 128, 138, 151 and 180.

As examples of pigments for green or cyan, listed are, for example, C. I. Pigment Blue 15, 15:2, 15:3, 15:4, 16, 60; and C. I. Pigment Green 7.

Further, as an example of pigments for black, listed is carbon black. To these pigments, pigment dispersing agents may be employed as needed. As examples of usable pigment dispersing agents, listed are active agents such as higher fatty acid salts, alkylsulfates, alkyl ester sulfates, alkylsulfonates, sulfosuccinates, naphthalene sulfonates, alkylphosphates, polyoxyalkylenealkylether phosphates, polyoxyethylene polyoxypropylene glycols, glycerol ester, sorbitan ester, polyoxyethylene fatty acid amides, and amine oxide; as well as block copolymers or random copolymers comprising more than 2 monomers selected from the group of styrene, styrene derivatives, vinylnaphthalene derivatives, acrulic acid, acrylic acid derivatives, maleic acid, maleic a cid derivatives, itaconic acid, itaconic acid derivatives, fumaric acid, fumaric acid derivatives, and salts thereof.

Further, in an ink of this invention, a self-dispersing pigment may also be employed. The term "self-dispersing pigment" indicates a pigment which can be dispersed without addition of a dispersing agent, and specifically preferred is pigment particles having polar groups on the surface of the particles.

The term "pigment particles having polar groups on the surface of the particles" means that a pigment is directly modified by polar groups on the surface of the pigment particle, or an organic compound having an organic pigment nucleus to which polar groups are connected directly or through a joint (hereinafter, referred to as a pigment derivative).

As examples of polar groups, listed are, for example, a sulfonic acid group, a carboxylic acid group, a phosphoric acid group, a boric acid group and a hydroxyl group, of which preferably listed are a sulfonic acid group and a carboxylic acid group, and more preferably a sulfonic acid group.

As methods to obtain pigment particles having polar groups on their surfaces, listed are methods to introduce polar groups such as a sulfonic acid group and its salt onto the portion of the pigment surface after the pigment surface has been oxidized using an appropriate oxidizing agent, as described in, for example, WO 97/48769, JP-A Nos. 10-110129, 11-246807, 11-57458, 11-189739, 11-323232, and 2000-265094. Specifically, the objective pigment particles are prepared by methods in which carbon black is oxidized in concentrated sulfuric acid, or in the case of a color pigment, it is oxidized in sulfolane or N-methyl-2-pyrrolidone using sulfamic acid, sulfonated pyridine salt or amidosulfuric acid. In these reactions, water-soluble reaction products by excessive oxidation are eliminated and refined to obtain the pigment dispersion. Further, in cases when sulfonic acid groups are introduced on the particle surface by oxidation, the acid groups may be neutralized using a basic compound as appropriate.

Listed as other methods are those in which pigment derivatives are absorbed onto the pigment particle surface using a treatment such as milling as described in JP-A Nos. 11-49974, 2000-273383, and 2000-303014, or a method in which a pigment is dissolved into a solvent together with the pigment derivative, after which the particles are crystallized in a poor solvent, as described in JP-A Nos. 2000-377068, 2001-1495, and 2001-234966. With either method, pigment particles having polar groups on their surface are easily obtained.

In the present invention, polar groups may be free or in the state of salts, or may have a counter salt. As a counter salt, listed are, for example, inorganic salts (e.g. lithium, sodium, potassium, magnesium, calcium, aluminum, nickel and ammonium); and organic salts (e.g. triethyl ammonium, diethyl ammonium, pyridinium, triethanol ammonium); preferable is a counter salt having a valence of one.

For the dispersion of the pigment, for example, a ball mill, sand mill, attritor, roll mill, agitator, Henschel mixer, colloid mill, ultrasonic homogenizer, pearl mill, wet jet mill, or paint shaker can be used. Further, when the pigment is dispersed, a dispersing agent can also be added.

As other dispersing agents, listed are a hydroxyl group containing carboxylic acid ester, a salt of a long-chain polyaminoamide with a high molecular weight acid ester, a salt of high molecular weight polycarboxylic acid, a salt of a long-chain polyaminoamide with a polar acid ester, a high molecular weight unsaturated acid ester, a macromolecule copolymer, a modified polyurethane, a modified polyacrylate, a polyether ester type anionic surface active agent, a naphthalenesulfonic acid formalin condensation product, an aromatic sulsonic acid formalin condensation product, a polyoxyethylene alkylphosphoric acid ester, a polyoxyethylene nonylphenyl ether, a stearylamine acetate, and a pigment derivative.

Specific examples of pigment dispersing agents include "Anti-Terra-U (a polyaminoamide phosphoric acid salt)", "Anti-Terra-203/204 (a high molecular weight polycarboxylic acid salt)", "Disperbyk-101 (polyaminoamide phosphoric acid salt and acid ester), -107 (a hydroxyl group containing carboxylic acid ester), -110 (an acid group containing copolymer), -130 (polyamide), -161, -162, -163, -164, -165,--166, and -170 (being macromolecule copolymers)", "-400", "Bykumen" (a high molecular weight unsaturated acid ester), "BYK-P104 and P105 (high molecular weight unsaturated polycarboxylic acids)" "P104S and P240S (high molecular weight unsaturated acid polycarboxylic acid and silicon based), and "Lactimon (long chain amine, unsaturated acid polycarboxylic acid, and silicon)", all manufactured by BYK-Chemie GmbH.

Further, listed are "Efka 44, 46, 47, 48, 49, 54, 63, 64, 65, 66, 71, 701, 764, and 766", "Efka Polymer 100 (a modified polyacrylate), 150 (an aliphatic modified polymer), 400, 401, 402, 403, 450, 451, 452, and 453 (modified polyacrylates), 745 (being copper phthalocyanine based)", all manufactured by Efka Additives B.V., and "Flowlen TG-710 (a urethane oligomer)", "Flownon SH-290, SP-1000", "Polyflow No. 50E, and No. 300 (acryl based copolymers)", manufactured by Kyoeisha Chemical Co., Ltd., "Disparlon KS-860, 873SN, and 874 (polymer dispersing agents), #2150 (an aliphatic multivalent carboxylic acid), and #7004 (a polyether ester type)", manufactured by Kusumoto Chemical, Ltd.

Further, listed are "Demol RN and N (both being naphthelenesulfonic acid formalin condensation product sodium salts), MS, C, and SN-B (all being aromatic sulfonic acid formalin condensation product sodium salts), and EP", "Homogenol L-18 (a polycarboxylic acid type polymer)", "Emulgen 920, 930, 931, 935, 950, and 985 (all being polyoxyethylene nonyl phenyl ethers)", and "Acetamin 24 (a coconut amine acetate) and 86 (a stearylamine acetate)", manufactured by Kao Corp., "Solsperse 5000 (phthalocyanine ammonium salt based), 13240 and 13940 (both being polyesteramine based), 17000 (being fatty acid amine based), 24000, and 2000", manufactured by zeneca Corp., and "Nikkol T106 (polyoxyethylene sorbitan monooleate), MYS-IEX (polyoxyethylene monostearate), and Hexagline 4-O (hexaglyceryl tetraoleate)", manufactured by Nikko Chemicals Co., Ltd.

Of these, a macromolecule type dispersing agent is preferable due to its capability of reducing shear dependency of the viscosity. The dispersing agent is preferably contained in ink in the range of 0.1 - 10 weight%.

Further, as the dispersion auxiliary, a synergist corresponding to each kind of pigment can also be used. It is preferable that 1 - 50 mass part of these dispersing agent or dispersion auxiliary is added to 100 mass part of the pigment. As a dispersion medium, the dispersion is conducted by using the solvent or polymerization compound, however, it is preferable that the active ray hardenable ink used in the present invention has no solvent because it is reacted and hardened just after the ink impacts. When the solvent remains on the hardened image, a problem of the deterioration of the solvent resistance, and VOC (Volatile Organic Compound) of the remaining solvent is generated.
Accordingly, it is preferable that the dispersion medium is not a solvent but a polymerization compound, and among them, a monomer having a low viscosity is preferable by considering a dispersion property.

In the dispersion of the pigment, it is preferable that the average particle diameter of pigment particles is 0.08 - 0.5 µm. The pigment, the dispersing agent, selection of the dispersion medium, dispersing condition, and filtering condition are set so that maximum particle diameter is within 0.3 - 10 µm, more preferably, 0.3 - 3 µm. By this particle diameter control, the clogging of the head nozzle can be suppressed, and keeping stability of the ink, ink transparency and hardening sensitivity can be maintained.

An content of a coloring material in the ink used in the present invention is preferably in the range of 1 - 10 weight % of the total weight of the ink.

### Shear rate

In UV curable type ink-jet ink, pigments are generally employed as colorants, and these are not only superior in weather resistance, but also usable from the viewpoint of not disturbing the reaction process compared to dyes. However, it is relatively difficult to disperse these small particle diameter pigments and low viscosity using monomers or oligomers of UV curable compounds. The ink viscoelasticity differs significantly depending on the variation of polymerizable compounds as dispersion media, kinds and primary particle diameters of pigments, surface treatment methods of pigments, kinds of dispersing agents, synergists, dispersion conditions, and pigment contents.

The ink viscosity differs widely depending on measuring conditions. It depends on not only temperature, but also on the shear rate during measurement. Since the ink is driven at a high rate in a very narrow orifice, the shear rate is significant. It is usually difficult to measure shear rate under close to the actual ejection conditions, however, it is preferred to measure at as a high shear rate as possible.

However, as a result of study, from a stable ejection point of view, it has been proved that the viscosity at low shear rate is very important. That is, to the ink flow in the ink passage of the head, high shear is not always applied. In cases when the ink viscosity is high enough to exhibit thixotropicity, pseudo-plasticity and fluidity, the viscosity rises extremely high at low shear conditions. In this case, when the ink runs out of stream in the passage without shear, or the head is not driven for a long time, the ink viscosity rises extremely, resulting in harmful effects of unstable flow at initial ejection. Specifically, since in the UV curable ink-jet ink, the polymerizable compound of its dispersion medium exhibits high viscosity, it is difficult to conduct dispersion at high fluidity, and it has been proved that these problems tend to be generated.

Specifically, in an ink-jet head promoting multi-sizing of ink droplets, making small sized droplets, and applying multi-nozzles to output high-definition images, differences of ink fluidity tends to cause unstable ejecting ability and deteriorated ejection accuracy.

Light color ink, having a low pigment content, has low shear rate dependency compared to deep color ink. In cases when both of the deep and the light color inks are used in this invention, it is proved that there is a preferable shear rate dependency. The inventor found that it is possible to reduce viscosity fluctuation even in light color inks having a strong shear rate dependency, and to prevent ink retention, and further to achieve a stable ink ejection rate and accurate ink deposition by making the viscosity ratio of the light and deep color inks to be 1 : 1.5 - 1 : 1 at 50 °C under a shear rate of 1,000 s⁻¹. In cases when the above viscosity ratio is less than 1, the ejection sensitivity of the light color ink is extremely reduced, resulting in insufficient ejection accuracy of the light color ink. When it is larger than 1.5, not only is ejecting ability of the deep color ink degraded, but also the driving force of ink-jet nozzles feeding to the light color ink becomes too much, resulting in problems such as air-injection.

In cases when multi-size ink droplets are ejected, ejection stability and deposition accuracy of each ink droplet can be enhanced, specifically when the ink viscoelasticity is controlled to the conditions of items 2 and 3 in SUMMARY. It is supposed that in cases when the droplet sizes differ, the applied shear rate to each droplet also differs.

Further, in cases when small droplets of not more than 20 pl are ejected, the ink is subjected to a significant shearing. Therefore, the smaller the viscosity difference between when the head is being driven or not, the more excellent the ejection stability.

In this invention, the viscosity(having a unit of mPa·s) can be measured with a viscometer calibrated using a standard solution for measuring viscosity based on the description of JIS Z 8809. The values of viscosity are those obtained using a known method under the condition of 50 °C with a shear rate of 1000 s⁻¹. As measuring apparatus, a rotating type, a vibrating type or a capillary type can be used. Examples are, Saybolt viscometer and Redwood Viscometer. Listed examples are: Conic-Disc type E viscometer produced by Tokimech Corporation, E viscometer (rotating viscometer) produced by Toki Sangyo Corporation, B viscometer BL produced by Tokyo Keiki Corporation, FVM-80A produced by Yamaichi Electric Corporation, Viscoliner produced by Nametore Industry Corporation, VISCO MATE MODEL VM-1A and DD-1 produced by Yamaichi Electric Corporation.

In this invention, as a method to obtain a viscosity ratio of the deep and light color inks under the conditions as defined above, it is preferable that the ratio of the polymerizable compound having the lowest viscosity in the deep and the light color inks is set higher. Additionally, the condition is achieved by appropriately selecting the kinds and concentration of the colorant.

### Polymerizable compound

Cationic polymerizable ink is used in the method of the invention due to easily obtained high sensitivity, since it does not exhibit polymerization inhibition by oxygen, which is a problem of radical polymerizable ink. In this invention, it is preferable that a cationic polymerizable compound contained at least one oxetane compound and at least one compound selected from either an epoxy compound or a vinyl ether compound.

A preferable aromatic epoxide is a di or poly-glycidyl ether produced by a reaction of a polyphenol having at least one aromatic nucleus or its alkylene oxide adduct with epichlorohydrin. Listed examples are, a di or poly-glycidyl ether of bisphenol A or its alkylene oxide adduct, di or poly-glycidyl ether of hydrogen added bisphenol A or its alkylene oxide adduct, and novolac type epoxy resin. Herein, as an alkylene oxide, ethylene oxide and propylene oxide are listed.

An alicyclic epoxide can be obtained by an epoxydation of a compound having at least one cyclohexene or cyclopentene ring with an appropriate oxidation agent such as hydrogen peroxide and peroxy acid. Preferable compounds are cyclohexene-oxide and cyclopentene-oxide.

Listed preferable examples of an alicyclic epoxide are di or poly-glycidyl ether of an aliphatic polyol or its alkylene oxide adduct.

Representative examples are:
di-glycidyl ether of alkylene glycol (such as di-glycidyl ether of ethylene glycol, di-glycidyl ether of propylene glycol and di-glycidyl ether of 1, 6 hexane diol);
poly-glycidyl ether of polyol (such as di or triglycidyl ether of glycerin or its alkylene oxide adduct); and
di-glycidyl ether of poly alkylene glycol (such as di-glycidyl ether of polyethylene glycol or its alkylene oxide adduct and di-glycidyl ether of polypropylene glycol or its alkylene oxide adduct).

Herein, as an alkylene oxide, ethylene oxide and propylene oxide are listed.

Among these epoxide, when the quick hardening property is considered, an aromatic epoxide and an alicyclic epoxide are preferable, and more preferable is an alicyclic epoxide. In the present invention, each of the above-described epoxides may be singly used, however, 2 or more kinds of them may also be appropriately combined and used.

As a vinyl ether compound, for example, di or tri-vinyl ether compound such as ethylene glycol di-vinyl ether, di-ethylene glycol di-vinyl ether, tri-ethylene glycol di-vinyl ether, propylene glycol di-vinyl ether, di- propylene glycol di-vinyl ether, butane diol di-vinyl ether, hexane diol di-vinyl ether, cyclohexane di-methanol di-vinyl ether, tri-methylol propane tri-vinyl ether, and mono-vinyl ether compound such as ethyl vinyl ether, n-butyl vinyl ether, isobutyl vinyl ether, octa-decil vinyl ether, cyclohexyl vinyl ether, hydroxyl butyl vinyl ether, 2-ethyl hexyl vinyl ether, cyclohexane di-methanol mono-vinyl ether, n-propyl vinyl ether, iso-propyl vinyl ether, iso-propenyl ether-O-propylene carbonate, dodecyl vinyl ether, di-ethylene glycol mono vinyl ether, octa-decyl vinyl ether, are listed.

Among these vinyl ether compounds, when the hardenability, adhesiveness, and surface hardness are considered, di or tri-vinyl ether compound is preferable, and particularly, di-vinyl ether compound is preferable. In the present invention, each of the above-described vinyl ether compounds may be singly used, but, 2 kinds or more of them may also be appropriately combined and used.

An oxetane compound in the present invention is a compound having an oxetane ring, and oxetane compounds which are publicly known as disclosed in JP-A No. 2001-220526, and JP-A No. 2001-310939, can be used.

When an oxetane compound having 5 or more oxetane rings in the molecule is used, the viscosity and the glass transition temperature of the ink become too high. This tends to cause difficult handling or insufficient stickiness. Therefore, an oxetane compounds having 1 to 4 oxetane rings is preferably used.

Specific example of the compounds having an oxetane ring according to the present invention will be described below, however, the present invention is not limited to them.

As an example of the compound having one oxetane ring in the molecule, the compounds shown by the following General Formula (1) are listed.

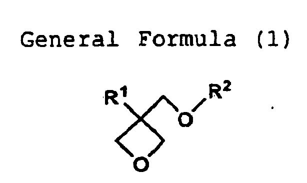

In the General Formula (1), R¹ is hydrogen atom or alkyl group of number of carbons of 1- 6, such as methyl group, ethyl group, propyl group, or butyl group, fluoro alkyl group of number of carbons of 1 - 6, allyl group, aryl group, furyl group or thienyl group. R² is alkyl group of number of carbons 1 - 6 such as methyl group, ethyl group, propyl group, or butyl group, alkenyl group of number of carbons 2 - 6 such as 1-propenyl group, 2-propenyl group, 2-methyl-1 propenyl group, 2-methyl-2-propenyl group, 1-buthenyl group, 2-buthenyl group, or 3 buthenyl group, a group having the aromatic ring such as phenyl group, benzyl group, fluoro benzyl group, methoxy benzyl group, or phenoxy ethyl group, alkyl carbonyl group of number of carbons 2 - 6, such as ethyl carbonyl group, propyl carbonyl group, or butyl carbonyl group, alkoxy carbonyl group of number of carbons 2 - 6, such as ethoxy carbonyl group, propoxy carbonyl group, or butoxy carbonyl group, or N-alkyl carbamoyl group of number of carbons 2 - 6, such as ethyl carbamoyl group, propyl carbamoyl group, butyl carbamoyl group or pentyl carbamoyl group. As the oxetane compound used in the present invention, it is particularly preferable that the compound having one oxetane ring is used, because the obtained composition is excellent in the stickiness and it is excellent in the operability in the low viscosity.

As an example of the compound having 2 oxetane rings in the molecule, the compounds shown by the following General Formula (2) are listed.

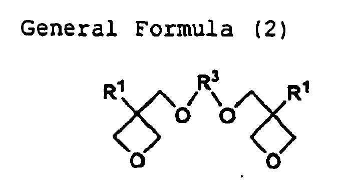

In the General Formula (2), R¹ is the same meaning as R¹ in the General Formula (1). R³ is a linear or branched chain alkylene group such as ethylene group, propylene group or butylene group, linear or branched chain poly (alkylene oxy) group, such as poly (ethylene oxy) group or poly (propylene oxy)group, linear or branched chain unsaturated hydrocarbon group, such as propenylene group, methyl propenylene group or butenylen group, or carbonyl group, or alkylene group including carbonyl group, alkylene group including carboxyl group, or alkylene group including carbamoyl group.

Further, as R³, a polyvalent group selected from the groups shown by the following General Formulas (3), (4), and (5) can also be listed.

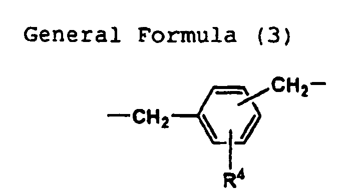

In the General Formula (3), R⁴ is hydrogen atom, or alkyl group of number of carbons 1 - 4 such as methyl group, ethyl group, propyl group, butyl group, alkoxy group of number of carbons of 1 - 4 such as methoxy group, ethoxy group, propoxy group, butoxy group, halogen atom such as chlorine atom, bromine atom, nitro group, cyano group, mercapto group, lower alkyl carboxyl group, carboxyl group, or carbamoyl group.

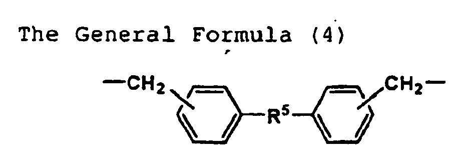

In the General Formula (4), R⁵ is oxygen atom, sulfur atom, methylene group, NH, SO, C(CF₃)₂, or C(CH₃)₂.

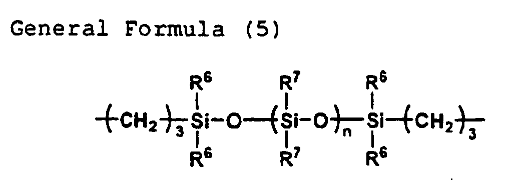

In General Formula (5), R⁶ is alkyl group of number of carbons 1 - 4, such as methyl group, ethyl group, propyl group butyl group, or aryl group. Numeral n is an integer of 0 - 2000. R⁷ is alkyl group of number of carbons 1 - 4, such as methyl group, ethyl group, propyl group, butyl group, or aryl group. As R⁷, a group selected from the group shown by the following General Formula (6) can also be further listed.

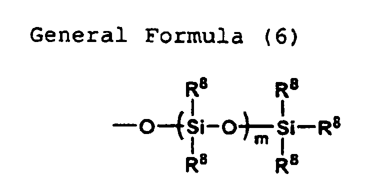

In the General Formula (6), R⁸ is alkyl group of number of carbons 1 - 4 such as methyl group, ethyl group, propyl group, and butyl group, or aryl group. Numeral m is an integer of 0 - 100.

As a specific example of the preferable compound having 2 oxetane rings in the molecule, the following compounds are listed.

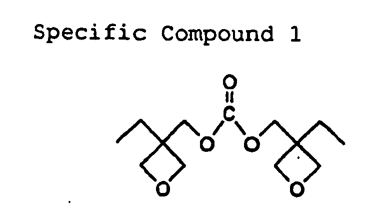

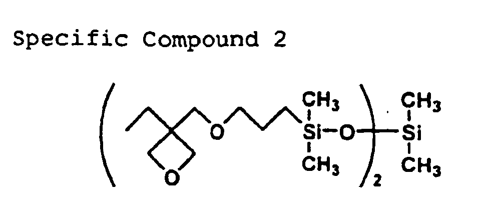

An illustrative compound 1 is, in the General Formula (2), a compound in which R¹ is ethyl group, and R³ is carboxyl group. Further, the illustrative compound 2 is, in the General Formula (2), a compound in which R¹ is ethyl group, and R³ is a compound in which R⁶ and R⁷ are, in the General Formula (5), methyl group, and numeral n is 1.

In the compound having 2 oxetane rings in the molecule, as the preferable example except the above-described compounds, there is a compound shown in the following General Formula (7). In the General Formula (7), R¹ is the same meaning as the R¹ in the General Formula (1).

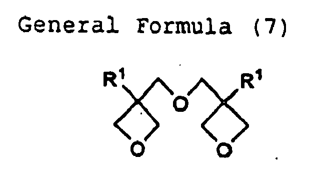

Further, as an example of the compound having 3 - 4 oxetane rings in the molecule, the compounds shown by the following General Formula (8) are listed.

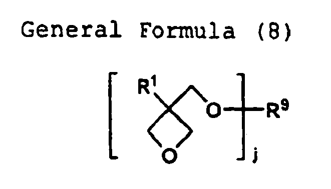

In the General Formula (8), R¹ is the same meaning as R¹ in the General Formula (1). As R⁹, a branched chain alkylene group of number of carbons 1 - 12 such as groups shown by the following A - C, branched chain poly (alkylene oxy) group such as group shown by the following D, or branched chain poly siloxy group such as group shown by the following E, are listed. Numeral j is 3 or 4.

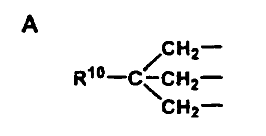

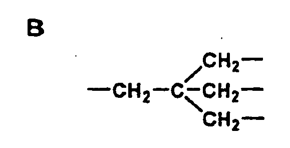

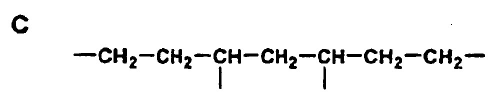

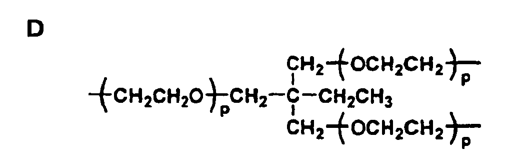

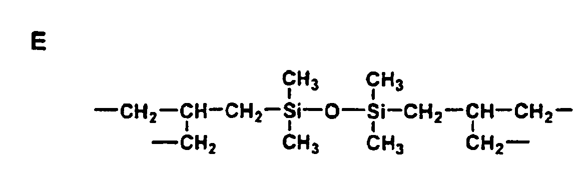

In above A, R¹⁰ is the lower alkyl group such as methyl group, ethyl group, or propyl group. Further, in above D, p is an integer of 1 - 10.

As an example of compound having 4 oxetane rings in the molecule, the Specific Compound 3 is listed.

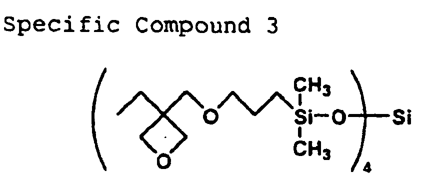

Further, as an example of compound having 1 - 4 oxetane rings except the above-described one, the compound shown by the following General Formula (9) is listed.

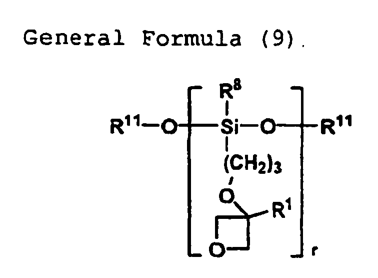

In the General Formula (9), R⁸ is the same meaning as R⁸ of the General Formula (6). R¹¹ is alkyl group of number of carbons 1 - 4 such as methyl group, ethyl group, propyl group or butyl group, or tri-alkyl silyl group, and r is 1 - 4.

As preferable specific examples of the oxetane compounds used in the present example, compounds 4, 5 and 6 shown below are listed.

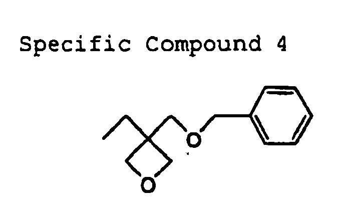

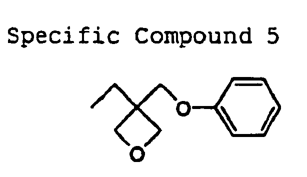

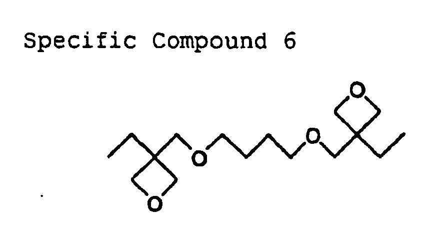

The production method of the compound having the above-described oxetane ring is not particularly limited, and may follow the conventionally known method, for example, there is the oxetane ring synthesizing method from diol, which is disclosed by Pattison (D.B. Pattison, J.Am. Chem. Soc., 3455, 79 (1957)). Further, other than this, compounds having 1 - 4 oxetane rings having the high molecular weight of about 1000 - 5000 are also listed. As the specific examples of these compounds, the following compounds are listed.

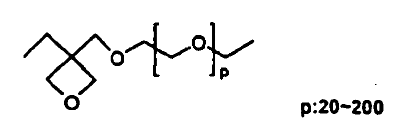

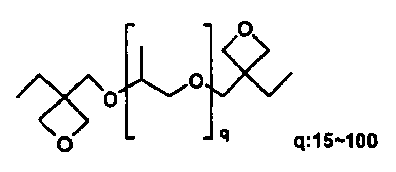

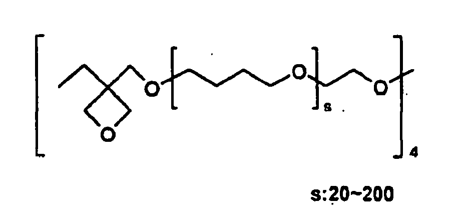

### Photo polymerization initiator

In this invention, to enable a curing reaction more effectively, curing is carried out by a photo acid generating agent and a cationic polymerizable compound.

As a photo acid generating agent, the compounds used for the chemical amplification type photo resist or photo cation polymerization is used (Organic electronics material study group edition, "Organic material for imaging" bunshin publication co., (1993), refer to page 187 - 192). Examples of the compounds preferable for the present invention will be listed below.

Initially, the salt such as B(C₆F₅)₄⁻, PF₆⁻, AsF₆⁻, SbF₆⁻, CF₃SO₃⁻ of the aromatic onium compound such as diazonium, ammonium, iodonium, sulfonium, phosphonium, can be listed.

Specific example of onium compound, which can be used in the present invention, will be shown blow.

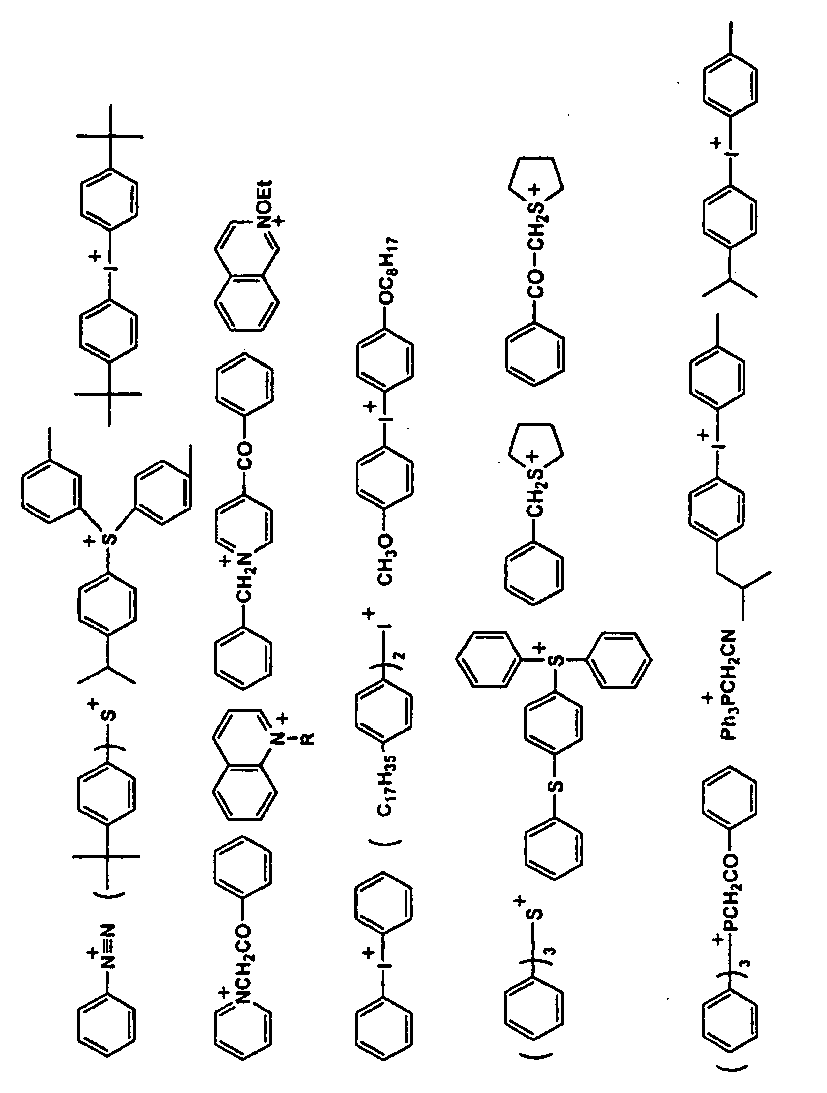

Secondly, the sulfonic compound generating the sulfonic acid can be listed. Its specific compound will be illustrated below.

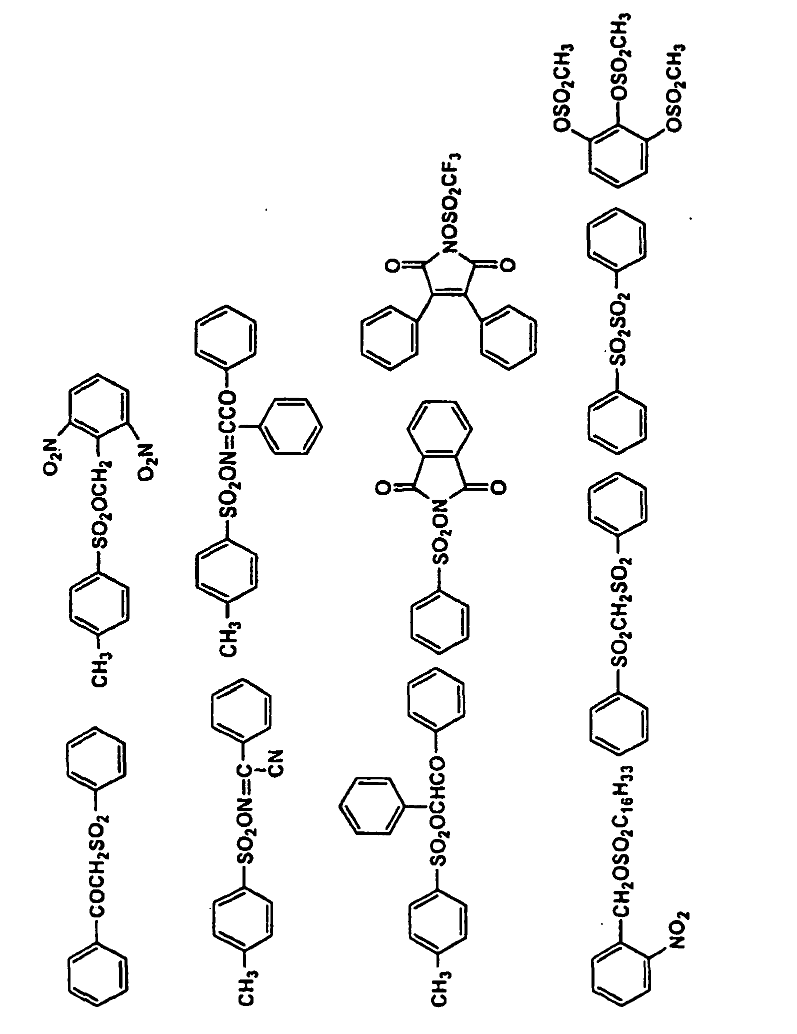

Thirdly, the halide compound generating the hydrogen halide can also be used. Its specific compound will be illustrated below.

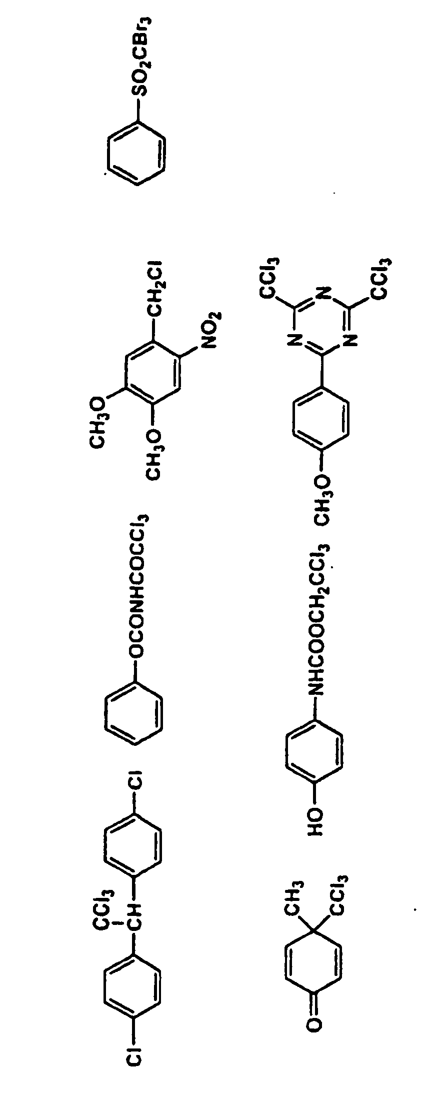

Fourthly, iron allene complex can be listed.

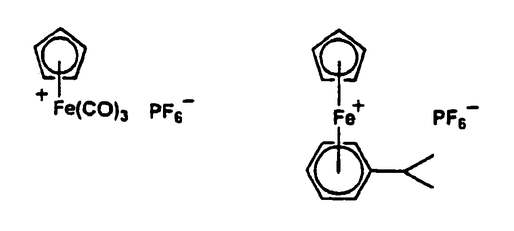

Further, the composition of this invention is cured by the UV ray radiation, and to perform curable reaction effectively, a photo sensitizing agent may be added. Listed as such photo sensitizing agents are, for example, amines such as triethanol amine, methyldiethanol amine, triisopropanol amine, 4-dimethylmethylaminobenzoate, 4-dimethylethylaminobenzoate, 4-dimethylisoamilaminobenzoate, benzoic acid(2-dimethylamino)ethyl ether, 4-dimethylaminobenzoic acid(n-butoxy)ethyl ether, and 4-dimethylaminobenzoic acid 2-ethylhexyl ether; cyanines, phthalocyanines, merocyanines, porphyrin, spiro compounds, ferrocene, fluorene, fulgide, imidazoles, perylene, phenazine, phenothiazines, polyene, azo compounds, diphenylmethane, triphenylmethane, polymethine acridine, coumarine, ketocoumarine, quinacridone, indigo, styryls, pyrylium compounds, pyrometene compounds, pyrazolotriazole compounds, benzothiazole compounds, barbituric acid derivatives, and thiobarbituric acid derivatives. Further, usable are compounds described in European Patent No. 568,993, U.S. Patent Nos. 4,508,811 and 5,227,227, and JP-A Nos. 2001-125255 and 11-271969. The added amount of the photo sensitizing agents is preferably in the range of 0.01 - 10.00 weight% of the total ink compositions.

Further, in this invention, to enhance opacifying properties on a transparent base material such as plastic film, printing of a white ink is preferred. Specifically, in flexible packaging printing and label printing, employing a white ink is preferred, however, the ink ejected amount may put too much demand on the ink heads, so that there is a practical limit for the ink usage amount from the viewpoint of stable ejection and curling, and subsequent creasing of the recording material.

As a recording material which can be used in the present invention, other than an ordinary non-coat sheet and coat sheet, non-absorptive support can be used. Among them, non-absorptive support is preferably used for the recording media.

As a non-absorptive support of the present invention, various kinds of plastic films can be used. Listed examples are; PET (polyethylene terephthalate) film, OPS (drawing polystyrene) film, OPP (drawing polypropylene) film, ONy (drawing nylon) film, PVC (polyvinyl chloride) film, PE (polyethylene) film, or TAC film can be listed. As the other plastic, polycarbonate, acrylic resin, ABS, polyacetal, PVA, or rubber can be used. Further, it can also be applied to metal or glass.

In these recording materials, particularly when the image is formed onto the PET film, OPS film, OPP film, ONy film, PVC film, which are shrinkable by the heat, the structure of the present invention is effective. In these base materials, not only the curl and deformation of the film are easily generated by the heat generation at the time of hardening shrinkage and hardening reaction of the ink, but the ink film also hardly follows the shrinkage of the base material.

The surface energy of each kind of plastic film is largely different and conventionally, it is a problem that the dot diameter after the ink impact is changed depending on the recording material. In the structure of the present invention, the good high minute image can be formed on the recording material of the wide range in which the surface energy is 35 - 60 dyn/cm including OPP film, OPS film, whose surface energy is low, and PET whose surface energy is comparatively large.

The recording apparatus employed in the present invention will now be described with reference to a drawing when deemed necessary. Further, the recording apparatus in the drawing is one of the embodiments employed in the present invention, but the recording apparatus employed in the present invention is not limited thereto.

Fig. 1 is a front view showing the structure of the main section of the recording apparatus employed in the present invention. Recording apparatus 1 is comprised of head carriage 2, recording head 3, illumination means 4, and platen section 5. Platen section 5 exhibits an ultraviolet radiation absorbing function and absorbs extra ultraviolet radiation which has been transmitted through recording material P. As a result, it is possible to very consistently reproduce highly fine and detailed images.

Recording material P is guided by guide member 6 and moves from the front to the back of Fig. 1, utilizing operation of a transport means (not shown). A head scanning means (also not shown) allows head carriage 2 to reciprocate in the Y direction shown in Fig. 1 whereby scanning of recording head 3, held by head carriage 2, is carried out.

Head carriage 2 is arranged above recording material P, and houses a plurality of recording heads 3, described below, matching the number of colors employed for printing images onto recording material P so that ink ejection openings are arranged on the lower side. Head carriage 2 is arranged in the main body of recording apparatus 1 in such manner that reciprocal motion is allowed in the Y direction in Fig. 1. driven by the head scanning means.

Incidentally, Fig. 1 shows that head carriage 2 houses deep yellow (Y), deep magenta (M), deep cyan (C), deep black (K), light yellow (Ly), light magenta (Lm), light cyan (Lc) and light black (Lb) recording heads 3. However, in practice, the number of colors of recording head 3, which are housed in carriage 2, is decided on a need basis.

In the followings, Deep yellow recording head is explained as an example of recording head 3.

Recording heads 3 eject a photocurable ink (also called an actinic radiation curable ink such as an ultraviolet radiation curable ink), which is supplied by an ink supply means (not shown), onto recording material P from ejection openings, utilizing operation of a plurality of ejection means (also not shown) arranged in its interior. The ultraviolet radiation curable ink (also called UV ink), which is ejected from recording heads 3, is comprised of colorants, polymerizable monomers, initiators, and the like. When exposed to ultraviolet radiation, the aforesaid initiators work as a catalyst, whereby curing properties are exhibited through crosslinking and polymerization reaction of the aforesaid monomers.

During scanning in which recording heads 3 move from one end of recording material P to the other end thereof along the Y direction in Fig. 1, while driven by the head scanning means, aforesaid recording heads 3 eject the aforesaid UV ink in the form of ink droplets onto a definite region (an ink droplet receivable area) of recording material P and impinge ink droplets onto the aforesaid ink droplet receivable area.

The aforesaid scanning is carried out at a suitable frequency. The aforesaid UV ink is ejected onto the ink droplet receivable region. Thereafter, recording material P is appropriately conveyed from the front to the back of Fig. 1, employing a conveying means, and scanning is again carried out employing the head scanning means. During the aforesaid scanning, the aforesaid UV ink is ejected onto the following ink droplet receivable region adjacent to the backward direction of Fig. 1, while employing recording heads 3.

The aforesaid operation is then repeated. By ejecting the aforesaid UV ink from recording heads 3 while synchronizing the head scanning means with the conveying means, an image comprised of an assembly of UV ink droplets is formed on recording material P.

Exposure means 4 is comprised of an ultraviolet radiation lamp which emits ultraviolet radiation of a specified wavelength region at consistent exposure energy, and a filter which transmits the ultraviolet radiation of the specified wavelength. Herein, employed as ultraviolet radiation lamps may be mercury lamps, metal halide lamps, excimer lasers, ultraviolet lasers, cold cathode tubes, black-light lamps, and LEDs (light emitting diodes). Of these, preferred are band-shaped metal halide lamp tubes, cold cathode tubes, mercury lamps, or black-light lamps. Specifically, preferred are cold cathode tubes and black-light lamps which emit ultraviolet radiation of a wavelength of 365 nm, because bleeding is minimized, dot diameter is efficiently controlled, and wrinkling during curing is minimized. By employing the black light lamp as a radiation source of exposure means 4, it is possible to prepare exposure means 4 to cure the UV ink at a lower cost.

Exposure means 4 is shaped to be nearly equal to the maximum one which can be set by recording apparatus (being a UV ink-jet printer) 1 of the ink dot receivable region in which the UV ink is ejected during one frequency of scanning in which recording heads 3 are driven by the head scanning means, or is shaped to be larger than the ink dot receiving region.

Exposure means 4 are arranged and fixed on both sides of head carriage 2, being nearly parallel to recording material P.

As noted above, as a means to control illuminance in the ink ejection section, needless to say, entire recording heads 3 are shielded from light. In addition, it is effective that distance h2 between ink ejection section 31 of recording heads 3 and recording material P is adjusted to be greater than distance h1 between exposure means 4 and recording material P (i.e., h1 < h2) and/or distance d between recording heads 3 and exposure means 4 increases (d increases). Further, it is more preferable that bellows structure 7 is applied between recording heads 3 and exposure means 4.

Herein, it is possible to suitably change the wavelength of ultraviolet radiation which is exposed employing exposure means 4 by replacing ultraviolet radiation lamps or filters fitted with exposure means 4.

### EXAMPLES

The present invention will be described below referring to examples, but the embodiments of this invention are not limited to these examples.

### Example 1

### Preparation of Ink-jet Ink

### Deep Color Ink-jet Ink Y1

The following compositions were dispersed for 4 hrs. using a sand grinder with zirconia beads, after which further additional dispersion was conducted for 10 min. using an ultrasonic disperser to obtain the desired pigment dispersion.

| | | |
|---|---|---|
| PY180 | (Yellow HG AF LP901, produced by Clariant AG) | 5 weight parts |
| PB821 | (AJISPER PB-821, being a dispersing agent, produced by Ajinomoto Co., Inc.) | 1.5 weight parts |
| OXT221 | (ARONOXETANE OXT-221, being a polymerizable compound, produced by TOAGOSEI CO., LTD.) | 58.5 weight parts |
| V9040 | (Vikoflex 9040, being a polymerizable compound, produced by Atfina Chemicals, Inc.) | 30 weight parts |

After that, mixed were 5 weight parts UVI6992 (being a photo polymerization initiator, produced by Dow Chemical Co., Ltd.), filtered using a 0.8 µm membrane filter, and then dehydrated under reduced pressure on heating at 50 °C, to obtain Deep Color Ink-jet Ink Y1.

In the same manner as for above Deep Color Ink-jet Ink Y1, Deep Color Ink-jet Inks M1, C1, and K1 having components described in Table 1, Light Color Ink-jet Inks LY1 - LY4, LM1 - LM4, LC1 - LC4, and LK1 - LK4, incorporating the components described in Tables 2 - 5, were prepared.

Viscosities of the two employed polymerizable compounds were each 5.3 and 13.7 mPa·s⁻¹ at 50 °C. Viscosity of each prepared ink at 50 °C, under a shear rate of 1,000 s⁻¹ and a ratio of OXT221/V9040 are shown in Tables 1 - 5. Viscosity was measured using an MCR300 viscometer, manufactured by Physica Co., Ltd.

**Table 1**

| Deep Color Ink Set 1 | | | | |
|---|---|---|---|---|
| Deep Color Ink-jet Ink | Y1 | M1 | C1 | K1 |
| PY180 | 5 | | | |
| PR146 | | 5 | | |
| PB15 : 4 | | | 4 | |
| PBk 7 | | | | 4 |
| PB821 | 1.5 | 1.5 | 1.2 | 1.2 |
| OXT221 | 58.5 | 58.5 | 52.8 | 47.8 |
| V9040 | 30 | 30 | 35 | 40 |
| UVI6992 | 5 | 5 | 7 | 7 |
| Total | 100 | 100 | 100 | 100 |
| Viscosity at 50 °C, shear rate of 1000^{s-1} (mPa·s) | 11.0 | 11.5 | 11.0 | 11.0 |

**Table 2**

| Light Color Ink Set 1 | | | | |
|---|---|---|---|---|
| Light Color Ink-jet Ink | LY1 | LM1 | LC1 | LK1 |
| PY180 | 1.25 | | | |
| PR146 | | 1.25 | | |
| PB15 : 4 | | | 1 | |
| PBk 7 | | | | 1 |
| PB821 | 0.375 | 0.375 | 0.3 | 0.3 |
| OXT221 | 65.375 | 65.375 | 59.7 | 54.7 |
| V9040 | 30 | 30 | 35 | 40 |
| UVI6992 | 3 | 3 | 4 | 4 |
| Total | 100 | 100 | 100 | 100 |
| Viscosity at 50 °C, shear rate of 1000s⁻¹ (mPa·s) | 10.0 | 10.3 | 10.8 | 10.8 |

**Table 3**

| Light Color Ink Set 2 | | | | |
|---|---|---|---|---|
| Light Color Ink-jet Ink | LY2 | LM2 | LC2 | LK2 |
| PY180 | 1.25 | | | |
| PR146 | | 1.25 | | |
| PB15 : 4 | | | 1 | |
| PBk 7 | | | | 1 |
| PB821 | 0.375 | 0.375 | 0.3 | 0.3 |
| OXT221 | 63.18 | 63.18 | 56.50 | 51.50 |
| v9040 | 30 | 30 | 35 | 40 |
| UVI6992 | 5.2 | 5.2 | 7.2 | 7.2 |
| Total | 100.00 | 100.00 | 100 | 100 |
| Viscosity at 50 °C, shear rate of 1000s⁻¹ (mPa·s) | 9.5 | 9.8 | 10.2 | 10.2 |

**Table 4**

| Light Color Ink Set 3 | | | | |
|---|---|---|---|---|
| Light Color Ink-jet Ink | LY3 | LM3 | LC3 | LK3 |
| PY180 | 1.25 | | | |
| PR146 | | 1.25 | | |
| PB15 : 4 | | | 1 | |
| PBk 7 | | | | 1 |
| PB821 | 0.375 | 0.375 | 0.3 | 0.3 |
| OXT221 | 58.5 | 58.5 | 52.8 | 47.8 |
| V9040 | 36.875 | 36.875 | 41.9 | 46.9 |
| UVI6992 | 3 | 3 | 4 | 4 |
| Total | 100 | 100 | 100 | 100 |
| viscosity at 50 °C, shear rate of 1000s⁻¹ (mPa·s) | 12.1 | 12.2 | 12.3 | 12.5 |

**Table 5**

| Light Color Ink Set 4 | | | | |
|---|---|---|---|---|
| Light Color Ink-jet Ink | LY4 | LM4 | LC4 | LK4 |
| PY180 | 1.25 | | | |
| PR146 | | 1.25 | | |
| PB15 : 4 | | | 1 | |
| PBk 7 | | | | 1 |
| PB821 | 0.375 | 0.375 | 0.3 | 0.3 |
| OXT221 | 58.5 | 58.5 | 52.8 | 47.8 |
| V9040 | 34.68 | 34.68 | 38.7 | 43.7 |
| UVI6992 | 5.2 | 5.2 | 7.2 | 7.2 |
| Total | 100.005 | 100.005 | 100 | 100 |
| Viscosity at 50 °C, shear rate of 1000s⁻¹ (mPa·s) | 11.9 | 11.8 | 11.7 | 11.6 |

**Table 101A**

| Deep Color Ink Set 2 | | | | |
|---|---|---|---|---|
| Deep Color Ink-jet Ink | Y2 | M2 | C2 | K2 |
| PY138 | 4 | | | |
| PR122 | | 4 | | |
| PB15 : 4 | | | 3 | |
| PBk 7 | | | | 3 |
| Dispersing agent | 1.2 | 1.2 | 0.9 | 0.9 |
| OXT221 | 54.8 | 54.8 | 59.1 | 59.1 |
| C2021P | 25 | 25 | 25 | 25 |
| OXT212 (mono-functional monomer) | 10 | 10 | 7 | 7 |
| UVI6992 | 5 | 5 | 5 | 5 |
| Total | 100 | 100 | 100 | 100 |
| Viscosity at 50 °C, shear rate of 1000s⁻¹ (mPa·s) | 11.9 | 11.8 | 10.4 | 10.2 |

**Table 101B.**

| Light Color Ink Set 5 | | | | |
|---|---|---|---|---|
| Light Color Ink-jet Ink | LY5 | LM5 | LC5 | LK5 |
| PY138 | 1 | | | |
| PR122 | | 1 | | |
| PB15 : 4 | | | 0.75 | |
| PBk 7 | | | | 0.75 |
| Dispersing agent | 0.3 | 0.3 | 0.225 | 0.225 |
| OXT221 | 60.7 | 60.7 | 61.03 | 61.03 |
| C2021P | 25 | 25 | 25 | 25 |
| OXT212 (mono-functional monomer) | 10 | 10 | 10 | 10 |
| UVI6992 | 3 | 3 | 3 | 3 |
| Total | 100 | 100 | 100 | 100 |
| Viscosity at 50 °C, shear rate of 1000s⁻¹ (mPa·s) | 9.6 | 9.5 | 9.1 | 9.0 |

| | | | | |
|---|---|---|---|---|
| Dispersing agent: AJISPER-PB822, produced by Ajinomoto CO. LTD. C2021P: CEROXIDE 2021P, produced by Daicel CO. LTD. OXT212: ARONOXETANE OXT-212, produced by TOAGOSEI CO., LTD.) Viscosity (mPa·s) at 50 °C: OXT221; 5.3, V9040; 13.7; OXT212; 2.6 | | | | |

**Table 102A**

| Deep Color Ink Set 3 | | | | |
|---|---|---|---|---|
| (without a mono-functional monomer) | | | | |
| Deep Color Ink-jet Ink | Y3 | M3 | C3 | K3 |
| PY138 | 4 | | | |
| PR122 | | 4 | | |
| PB15 : 4 | | | 3 | |
| PBk 7 | | | | 3 |
| Dispersing agent | 1.2 | 1.2 | 0.9 | 0.9 |
| OXT221 | 64.8 | 64.8 | 66.1 | 66.1 |
| C2021P | 25 | 25 | 25 | 25 |
| OXT212 (mono-functional monomer) | none | none | none | none |
| UVI6992 | 5 | 5 | 5 | 5 |
| Total | 100 | 100 | 100 | 100 |
| Viscosity at 50 °C, shear rate of 1000 s⁻¹ (mPa·s) | 12.9 | 12.7 | 11.5 | 11.3 |

**Table 102B**

| Light color Ink Set 6 | | | | |
|---|---|---|---|---|
| (without a mono-functional monomer) | | | | |
| Deep Color Ink-jet Ink | LY6 | LM6 | LC6 | LK6 |
| PY138 | 1 | | | |
| PR122 | | 1 | | |
| PB15 : 4 | | | 0.75 | |
| PBk 7 | | | | 0.75 |
| Dispersing agent | 0.3 | 0.3 | 0.225 | 0.225 |
| OXT221 | 70.7 | 70.7 | 71.03 | 71.03 |
| C2021P | 25 | 25 | 25 | 25 |
| OXT212 (mono-functional monomer) | none | none | none | none |
| UVI6992 | 3 | 3 | 3 | 3 |
| Total | 100 | 100 | 100 | 100 |
| Viscosity at 50 °C, shear rate of 10.00s⁻¹ (mPa·s) | 10.6 | 10.2 | 9.5 | 9.4 |

### Evaluation of Ink Set

Using an ink-jet printer of a serial recording method with an 8 color corresponding head shown in Fig. 1, evaluation of 4 ink sets was conducted, combining the above prepared ink-jet inks as follows:
a. Deep Color Ink Set 1 (Y1, M1, C1 and K1) + Light Color Ink Set 1 (LY1, LM1, LC1 and LK1)
b. Deep Color Ink Set 1 + Light Color Ink Set 2 (LY2, LM2, LC2 and LK2)
c. Deep Color Ink Set 1 + Light Color Ink Set 3 (LY3, LM3, LC3 and LK3)
d. Deep Color Ink Set 1 + Light Color Ink Set 4 (LY4, LM4, LC4 and LK4)

The ink-jet head featured a nozzle pitch of 360 per inch/2.54 cm, and featured a piezo type head capable of ejecting 3 droplet sizes of 4 pl, 8 pl and 12 pl. The ink-jet head and the ink passage were maintained at 50 °C. Images were formed with a recording density of 720 dpi, and a multi-drop method made it possible to eject a maximum 3 drops per pixel. The term "dpi" means dots per inch (being 2.54 cm). Four passes were requested to complete each image.

Gray scales of the deep color ink and the light color ink (droplet sizes: pl) were set up as in Table 6, and 256 gray scales were represented by an error diffusion method.

**Table 6**

| Gray scale | 0 | 1 | 2 | 3 | 4 | 5 | 6 |
|---|---|---|---|---|---|---|---|
| Deep color ink (pl) | 0 | 0 | 0 | 0 | 4 | 8 | 12 |
| Light color ink (pl) | 0 | 4 | 8 | 12 | 12 | 8 | 4 |

As a light source, metal halide lamps were placed on both side of the carriage. Immediately following ink ejection, curing was conducted. PET film was employed as a recording medium. The head driving conditions were set up to be the same for both the deep color ink and the light color ink.

Regarding obtained images, graininess in highlighted areas, ink bleeding, adhesiveness, anti-solvent property, deposition accuracy and ejection stability were evaluated as follows, the results of which are shown in Table 7. Graininess in Highlighted Areas

Graininess in a highlighted areas was evaluated using a highlighted area portion of each of the color wedge images prepared above. Evaluation was conducted by 20 random people with visual evaluation based on the following criteria.
A: More than 16 persons noticed no roughness in the images.
B: 12 - 15 persons noticed no roughness in the images.
C: 8 - 11 persons noticed no roughness in the images.
D: Less than 7 persons noticed no roughness in the images.

In the above evaluation, ranks A and B were judged to be commercially viable and preferable level.

### Ink Bleeding

Evaluation was conducted as to whether the cyan text image edges were sharp.
A: Text edges were sharp.
B: Text edges were slightly blurred.
C: Text edges were blurred.

### Adhesiveness

An adhesive tape peeling test was conducted. Three shallow slits about 3 cm long, were made over the entire surface of the recording side of each sample, onto which Sellotape® was adhered, and then after rubbing them 10 times with a finger nail, the tape was peeled away at 180° for evaluation, using the following criteria:
A: No image was peeled.
B: Parts of the images were peeled off.
C: All image portions were peeled off.

### Anti-solvent Property

After the printed images were soaked in methyl ethyl ketone for 10 sec., image damage and shrinkage were visually evaluated based on the following criteria.
A: No change.
B: Images were slightly dissolved.
C: Images were obviously dissolved.

### Deposition Accuracy

Using the obtained inks with piezo type ink-jet nozzles capable of ejecting multi size droplets, rectilinear propagation property of the droplets after 10 hrs. of continuous ejection was evaluated, during which the ink and the head were maintained at 50 °C with a driving frequency of 10 kHz. Rectilinear propagation was evaluated based on the following criteria.
A: Angle errors of all ink channels within the head were within 1.5°.
B: Angle errors of same channels were more than 2°.

### Ejection Stability

Evaluation was conducted by continuous ejection of droplets for 30 min.
A: No nozzle clogging in any color was observed, nor was droplet adhesion on nozzle surfaces by satelliting.
B: No nozzle clogging was observed, but slight droplet adhesion on some portions of nozzle surfaces by satelliting was observed.
C: Nozzle clogging or large ejection angle errors were observed, as well as droplet adhesion on nozzle surfaces by satelliting.

**Table 7**

| Ink set | Highlight graininess | Ink bleeding | Adhesiveness | Anti-property | Deposition accuracy | Ejection stability | Remarks |
|---|---|---|---|---|---|---|---|
| Deep color ink set 1 + Light color ink set 1 | A | A | A | A | A | A | Inv. |
| Deep color ink set 1 + Light color ink set 2 | B | B | C | C | A | A | Inv. |
| Deep color ink set 1 + Light color ink set 3 | C | A | A | A | B | C | Comp. |
| Deep color ink set 1 + Light color ink set 4 | D | B | C | C | B | C | Comp. |

| | | | | | | | |
|---|---|---|---|---|---|---|---|
| Note: Inv.: This invention Comp.: Comparative example | | | | | | | |

In the case of the ink set of Deep color ink set 1 + Light color ink set 2, the amount of the initiator was increased in intermediate color areas, in which interior curability was thought to be deteriorated. Light color ink set 2 exhibited preferable viscosity, and was superior in ejection stability and deposition accuracy.

Light color ink set 3 in the ink set of Deep color ink set 1 + Light color ink set 3 exhibited high viscosity, but was inferior in deposition accuracy and ejection stability. Further, due to deposition deterioration, graininess in highlighted areas was slightly inferior. However, since the amount of the initiator was appropriate, adhesiveness and anti-solvent property were adequate.

The ink set of Deep color ink set 1 + Light color ink set 4 exhibited deteriorated interior curability since the amount of the initiator in Light color ink set 4 was beyond the preferable range. Further, Light color ink set 4 exhibited high viscosity but low ejection stability.

### Example 2

Using the ink set of Deep color ink set 1 + Light color ink set 1 prepared in Example 1, and changing the recording methods as described in Table 8, Ink bleeding and Adhesiveness and Anti-solvent property were evaluated. The maximum droplet size was defined as the total maximum droplet size in overlapped portions of deep and light color inks. The results are shown in Table 8.

**Table 8**

| Recording method | Nozzle pitch (dpi) | Maximum droplet (pl) | Recorded resolution (dpi) | Pass number | Ink bleeding | Adhesiveness | Anti-solvent property | Remarks |
|---|---|---|---|---|---|---|---|---|
| 1 | 360 | 28 | 360 | 1 | C | C | C | Comp. |
| 2 | 360 | 28 | 360 | 4 | B | B | B | Inv. |
| 3 | 360 | 12 | 720 | 8 | A | A | A | Inv. |

| | | | | | | | | |
|---|---|---|---|---|---|---|---|---|
| Note: Comp.: Comparative example Inv.: This invention | | | | | | | | |

In the case of Recording method 1 with 360 dpi and 1-pass recording (being line recording), interior ink curability was deteriorated because both deep and light color inks were used and the resulting thick ink layer was cured immediately. Even with similar compositions, in the case of Recording method 2 of a 4-pass serial recording method, it is possible to cure the ink in sequential passes, after which sufficient curability is obtained because the deep and light color inks in which the ratio of initiators were changed in view of ink curability when the deep and light color inks were mixed. As in Recording method 3 with 8-passes and small droplet sizes, ink curability was further improved.

Further, when a similar test was conducted using the ink set of Deep color ink set 1 + Light color ink set 2, Ink bleeding, Adhesiveness and Anti-solvent property were all deteriorated. It is thought that ink interior curability was deteriorated due to an increase of the amount of initiator in intermediate color areas.

### Example 3

Using the ink sets of (i) Deep color ink set 2 + Light color ink set 5 and (ii) Deep color ink set 3 + Light color ink set 6, test images are prepared in the same manner as in Example 2, Table 8, recording method 3, having a recorded resolution of 720 dpi.

Criteria of evaluation item of Folding resistance are as follows:
A: No cracking is observed in a 4C portion having a largest amount of ink when folded the recorded sample; and
B: Cracking is observed in a 4C portion having a largest amount of ink when folded the recorded sample.

The evaluation results are shown in Table 103.

**Table 103**

| Ink set | Highlight graininess | Ink bleeding | Adhesive-ness | Anti-solvent property | Deposition accuracy | Ejection stability | Folding Resistance |
|---|---|---|---|---|---|---|---|
| Deep color ink set 2 + Light color ink set 5 | A | A | A | A | A | A | A |
| Deep color ink set 3 + Light color ink set 6 | A | A | B | A | A | B | C |

According to the present invention, it is possible to provide a method for image recording using an ink set for ink-jet recording which provides high quality images.

## Claims

1. A method of recording an image using an ink set for ink-jet recording, comprising the steps of:
(i) jetting droplets of the ink onto a recording media from a nozzle of an ink-jet head in a serial ink-jet printer;
(ii) forming the image by repeating the step (i) at least two times; and
(iii) irradiating the image with an ultraviolet ray, wherein the ink set comprises two ultraviolet-curing inks of the same color, one of the inks being a deep color ink and the other being a light color ink,
wherein each of the inks contains:
(a) a colorant;
(b) a polymerizable compound, wherein the polymerisable compound is a cationic polymerisable compound; and
(c) a photo acid generating agent,
a viscosity ratio of the light color ink to the deep color ink being 1:1 to 1:1.5, the viscosity being measured at 50°C and under a condition of shear rate of 1000 s⁻¹ using a MCR300 viscometer.

2. The method of claim 1, wherein each ink contains two polymerizable compounds having a different viscosity, and a weight content of the polymerizable compound having a low viscosity is larger than a weight content of the polymerizable compound having a high viscosity.

3. The method of claims 1, 2 or 3, wherein the polymerizable compound comprises a mono-functional monomer in an amount of not less than 5 weight% based on the total weight of the polymerizable compound.

4. The method of claims 1, 2, 3 or 4 wherein a smallest volume of the ink droplets is from 1 to 20 pl.

## Patentansprüche

1. Verfahren zur Aufzeichnung eines Bildes unter Verwendung eines Druckfarbensatzes zur Tintenstrahlaufzeichnung, wobei das Verfahren die Stufen
(i) Aufspritzen von Tröpfchen der Druckfarbe auf ein Aufzeichnungsmedium aus einer Düse eines Tintenstrahlkopfs in einem seriellen Tintenstrahldrucker;
(ii) Erzeugen des Bildes durch mindestens zweimaliges Wiederholen der Stufe (i) und
(iii) Bestrahlen des Bildes mit Ultraviolettstrahlung umfasst,
wobei der Druckfarbensatz zwei ultravioletthärtende Druckfarben der gleichen Farbe umfasst, wobei eine der Druckfarben eine Druckfarbe dunkler Farbe und die andere eine Druckfarbe heller Farbe ist,
wobei jede der Druckfarben
(a) ein Farbmittel;
(b) eine polymerisierbare Verbindung, wobei die polymerisierbare Verbindung eine kationisch polymerisierende Verbindung ist; und
(c) ein durch Licht Säure erzeugendes Mittel enthält,
wobei das Viskositätsverhältnis der Druckfarbe heller Farbe zur Druckfarbe dunkler Farbe 1:1 bis 1:1,5 beträgt, wobei die Viskosität bei 50 °C und unter der Bedingung einer Scherrate von 1000 s⁻¹ unter Verwendung eines MCR300-Viskosimeters ermittelt wird.

2. Verfahren nach Anspruch 1, wobei jede Druckfarbe zwei polymerisierbare Verbindungen mit unterschiedlicher Viskosität enthält und der Gewichtsanteil der polymerisierbaren Verbindung mit niedriger Viskosität größer als der Gewichtsanteil der polymerisierbaren Verbindung mit hoher Viskosität ist.

3. Verfahren nach den Ansprüchen 1, 2 oder 3, wobei die polymerisierbare Verbindung ein monofunktionales Monomer in einer Menge von nicht weniger als 5 Gew.-%, bezogen auf das Gesamtgewicht der polymerisierbaren Verbindung, umfasst.

4. Verfahren nach den Ansprüchen 1, 2, 3 oder 4, wobei das kleinste Volumen der Tintentröpfchen 1 bis 20 pl beträgt.

## Revendications

1. Procédé d'enregistrement d'une image en utilisant un jeu d'encre pour enregistrement par jet d'encre, comprenant les étapes consistant à :
(i) projeter des gouttelettes de l'encre sur un support d'enregistrement par une buse d'une tête à jet d'encre dans une imprimante à jet d'encre série ;
(ii) former l'image par répétition de l'étape (i) au moins deux fois ; et
(iii) irradier l'image avec un rayonnement ultraviolet,
dans lequel le jeu d'encre comprend deux encres de la même couleur à polymérisation aux ultraviolets, l'une des encres étant une encre de couleur foncée et l'autre étant une encre de couleur claire,
dans lequel chacune des encres contient :
(a) un colorant ;
(b) un composé polymérisable qui est un composé polymérisable par polymérisation cationique ; et
(c) un agent produisant un photo-acide,
le rapport de viscosité de l'encre de couleur claire et de l'encre de couleur foncée étant de 1 :1 à 1 :1,5, la viscosité étant mesurée à 50°C et dans un état de taux de cisaillement de 1000 s⁻¹ en utilisant un viscosimètre MCR300.

2. Procédé selon la revendication 1, dans lequel chaque encre contient deux composés polymérisables ayant une viscosité différente, et la teneur en poids du composé polymérisable ayant une faible viscosité est supérieure à la teneur en poids du composé polymérisable ayant une viscosité élevée.

3. Procédé selon la revendication 1 ou 2, dans lequel le composé polymérisable comprend un monomère monofonctionnel en une quantité non inférieure à 5 % en poids par rapport au poids total du composé polymérisable.

4. Procédé selon la revendication 1, 2 ou 3, dans lequel le volume minimal des gouttelettes d'encre est de 1 à 20 pl (picolitre).
